# EUROPÄISCHE PATENTSCHRIFT

(11) **EP 2 233 709 B1**
(45) Veröffentlichungstag und Bekanntmachung des Hinweises auf die Patenterteilung: **27.07.2016**
(21) Anmeldenummer: 10152662.2
(22) Anmeldetag: 04.02.2010
(51) Int. Cl.: F01N 3/033, F01N 3/28, F01N 3/20, F01N 13/00, F01N 13/02

(54) **Abgasbehandlungseinrichtung**
Exhaust treatment device
Dispositif de traitement de gaz d'échappement

(30) Priorität: 26.03.2009 DE 102009014433
(43) Veröffentlichungstag der Anmeldung: 29.09.2010
(73) Patentinhaber: Eberspächer Exhaust Technology GmbH & Co. KG, 66539 Neunkirchen (DE); Volvo Lastvagnar AB, 405 08 Göteborg (SE)
(72) Erfinder: Werni, Marcus, 71334, Waiblingen (DE); Lehnen, Rainer, 73061, Ebersbach (DE); Wahlström Gert-Ove, 43644 Askim (SE)
(74) Vertreter: BRP Renaud & Partner mbB Rechtsanwälte Patentanwälte Steuerberater

(56) Entgegenhaltungen:
- EP-A1- 1 691 045
- EP-A1- 1 736 645
- WO-A1-2004/063540
- WO-A1-2014/167352

## Beschreibung

Die vorliegende Erfindung betrifft eine Abgasbehandlungseinrichtung für eine Abgasanlage einer Brennkraftmaschine, insbesondere eines Kraftfahrzeugs, mit den Merkmalen des Oberbegriffs des Anspruchs 1.

Zur Abgasbehandlung ist es bekannt, flüssige Reduktionsmittel in den Abgasstrom einzubringen. Beispielsweise kann stromauf eines sogenannten SCR-Katalysators, der eine selektive katalytische Reduktion durchführen kann, Ammoniak oder Harnstoff bzw. eine wässrige Harnstofflösung dem Abgasstrom zugemessen werden, um im SCR-Katalysator Stickoxide abzubauen. Wichtig für eine ordnungsgemäße und effiziente Wirkungsweise eines derartigen SCR-Katalysators bzw. einer anderen mit einem zugemessenen flüssigen Edukt arbeitenden Einrichtung ist, dass ein möglichst homogenes Gemisch zwischen Abgas und Reduktionsmittel erreicht wird. Ferner soll außerdem bei bestimmten Edukten eine möglichst weitgehende bzw. vollständige Verdampfung des im flüssigen Zustand eingebrachten Edukts realisiert werden, bevor das Gemisch zur jeweiligen Einrichtung, beispielsweise zum SCR-Katalysator gelangt. Hierzu ist es üblich, innerhalb der jeweiligen Abgasbehandlungseinrichtung eine Mischstrecke bereitzustellen, die üblicherweise durch ein geradliniges Rohr gebildet ist, durch welches das Edukt-Abgas-Gemisch in eine Kammer gelangt, in die ein Einlass des jeweiligen SCR-Katalysators bzw. der jeweiligen Behandlungseinrichtung einmündet.

Aus der EP 1 736 645 A1 ist beispielsweise eine Abgasbehandlungseinrichtung bekannt, die mit einem Gehäuse, das einen seitlich umlaufenden Mantel, zwei Endböden und einen axial zwischen den Endböden liegenden Zwischenboden aufweist, mit einem Mischgehäuse, das im Inneren des Gehäuses angeordnet ist und das eine Mischkammer, einen den Zwischenboden durchsetzenden, mit der Mischkammer kommunizierenden Einlass und einen den Zwischenboden durchsetzenden, mit der Mischkammer kommunizierenden Auslass aufweist, und mit zumindest einer Zumesseinrichtung zum Einbringen eines Reduktionsmittels in die Mischkammer ausgestattet ist. Bei der bekannten Abgasbehandlungeinrichtung durchsetzen Einlass und Auslass den jeweiligen Zwischenboden.

Eine weitere Abgasbehandlungseinrichtung dieser Art ist aus der WO 2004/063540 A1 bekannt.

Die vorliegende Erfindung beschäftigt sich mit dem Problem, für eine Abgasbehandlungseinrichtung der eingangs genannten Art eine verbesserte Ausführungsform anzugeben, die sich insbesondere durch eine verbesserte Durchmischung bzw. Homogenisierung des Edukt-Abgas-Gemischs und/oder durch eine verbesserte Verdampfung eines im flüssigen Zustand in das Abgas eingebrachten Edukts auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, im Gehäuse der Abgasbehandlungseinrichtung zusätzlich ein Mischgehäuse anzuordnen, das eine Mischkammer enthält sowie einen Einlass und einen Auslass aufweist, die jeweils mit der Mischkammer kommunizieren. Dabei sind Einlass und Auslass so angeordnet, dass sie jeweils einen Boden des Gehäuses durchsetzen. Bei einem ebenen Boden des Gehäuses bedeutet dies zwangsläufig, dass eine Abgasströmung, die über den Einlass in die Mischkammer eintritt und über den Auslass daraus austritt, innerhalb der Mischkammer zumindest um 180° umgelenkt werden muss. Diese wesentliche Umlenkung der Gasströmung führt zu einer intensiven Durchmischung bzw. Homogenisierung. Das separate Mischgehäuse hat zusätzlich den gravierenden Vorteil, dass es separat vom eigentlichen Gehäuse der Abgasbehandlungseinrichtung hergestellt und beispielsweise hinsichtlich seiner Dichtigkeit und/oder hinsichtlich seiner Materialauswahl an das zu durchmischende Gemisch angepasst werden kann. Beispielsweise kann das Mischgehäuse aus einem höherwertigen Material hergestellt sein, während das Gehäuse der Abgasbehandlungseinrichtung aus einem im Vergleich dazu preiswerteren Material hergestellt werden kann bzw. weniger sorgfältig abgedichtet werden muss. Insgesamt lassen sich dadurch die Herstellungskosten signifikant reduzieren, wobei gleichzeitig eine ausreichende Strömungsmischung realisierbar ist.

Erfindungsgemäß ist im Mischgehäuse zumindest eine Führungswand angeordnet, die in der Mischkammer eine vom Einlass über einen Umlenkabschnitt zum Auslass führende Mischstrecke ausbildet. Durch diese gezielte Strömungsführung innerhalb der Mischkammer kann eine vergleichsweise lange Mischstrecke realisiert werden. Je länger diese Mischstrecke, desto größer ist die Verweildauer des Gemischs innerhalb der Mischkammer, was für eine intensive Homogenisierung sowie auch für eine intensive Verdampfung eines flüssig eingebrachten Edukts förderlich ist.

Bei einer Weiterbildung kann im Mischgehäuse eine Zwischenwand angeordnet sein, die in der Mischkammer zwei Ebenen voneinander trennt, in denen sich die Mischstrecke erstreckt. Hierdurch kann die Länge der Mischstrecke signifikant vergrößert werden, insbesondere lässt sich die Mischstreckenlänge dadurch quasi verdoppeln.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

### Es zeigen, jeweils schematisch

- Fig. 1: eine axiale Ansicht einer Abgasbehandlungseinrichtung mit Umlenkgehäuse,
- Fig. 2: eine axiale Ansicht eines Umlenkgehäuses einer anderen Ausführungsform,
- Fig. 3: einen Längsschnitt der Abgasbehandlungseinrichtung entsprechend Schnittlinien III in Fig. 1,
- Fig. 4-7: vergrößerte Ansichten eines Details IV in Fig. 3,
- Fig. 8-13: vergrößerte Ansichten eines Details VIII aus Fig. 3,
- Fig. 14-16: Seitenansichten der Abgasbehandlungseinrichtung im Bereich des Umlenkgehäuses bei unterschiedlichen Ausführungsformen,
- Fig. 17: einen Längsschnitt der Abgasbehandlungseinrichtung entsprechend Schnittlinien XVII in Fig. 1,
- Fig. 18-23: Schnittansichten wie in Fig. 17, jedoch bei unterschiedlichen Ausführungsformen eines Mischgehäuses,
- Fig. 24-29: axiale Ansichten des Mischgehäuses entsprechend den Ausführungsformen der Fig. 18-23,
- Fig. 30: eine weitere Schnittansicht wie in den Fig. 17-23 zur Veranschaulichung verschiedener Einbaupositionen einer Zumesseinrichtung.

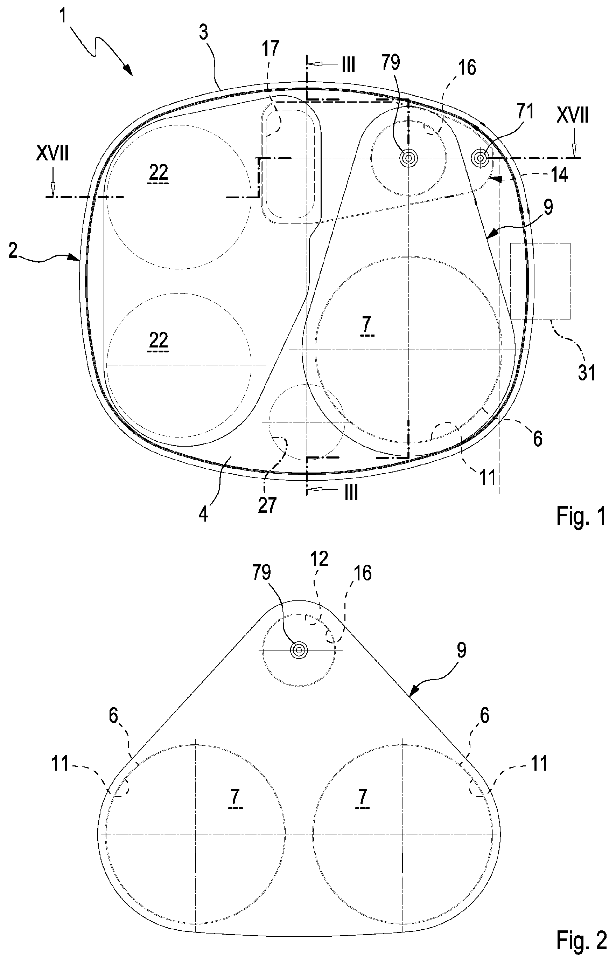

Entsprechend Fig. 1 kann eine Abgasbehandlungseinrichtung 1, die zur Verwendung in einer Abgasanlage einer Brennkraftmaschine, insbesondere eines Kraftfahrzeugs, vorgesehen ist, ein Gehäuse 2 aufweisen, das einen seitlich umlaufenden Mantel 3 sowie zwei endseitige Böden oder Endböden 4, 5 aufweist, von denen in Fig. 1 dem Betrachter nur der eine bzw. erste Endboden 4 zugewandt ist. Der andere bzw. zweite Endboden 5 ist am vom ersten Endboden 4 entfernten Ende des Gehäuses 2 angeordnet.

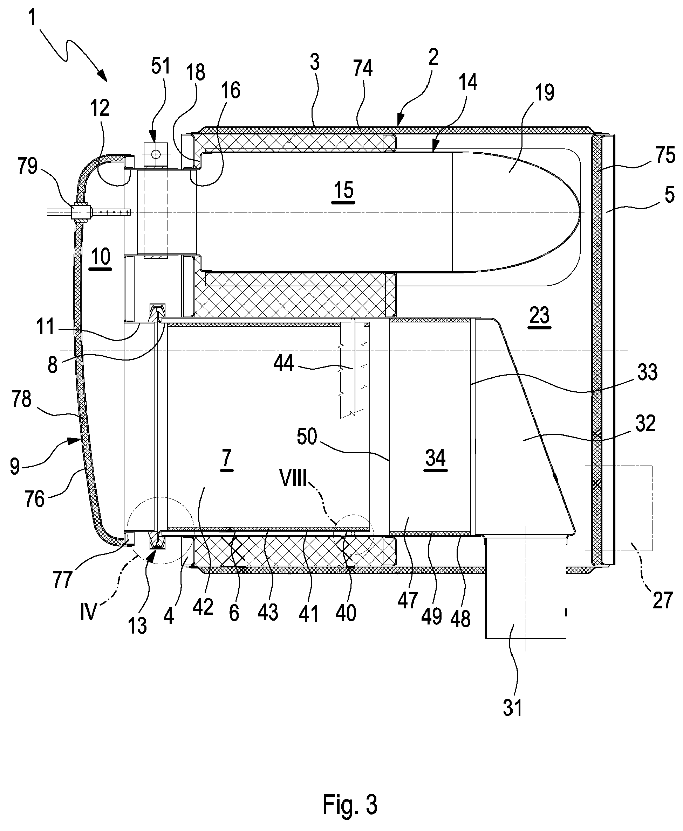

Entsprechend den Fig. 1-3 ist die Abgasbehandlungseinrichtung 1 zweckmäßig mit wenigstens einem Aufnahmerohr 6 ausgestattet. Bei der in den Fig. 1 und 3 gezeigten Ausführungsform ist genau ein solches Aufnahmerohr 6 vorgesehen. Rein exemplarisch zeigt Fig. 2 eine Ausführungsform mit zwei derartigen Aufnahmerohren 6. Das jeweilige Aufnahmerohr 6 durchdringt den ersten Endboden 4 axial. Ferner nimmt das jeweilige Aufnahmerohr 6 ein Partikelfilter 7 auf. Hierzu ist das jeweilige Partikelfilter 7 in ein den ersten Endboden 4 durchdringendes Auslassende 8 des Aufnahmerohrs 6 axial und von außen, also von einer vom Inneren 23 des Gehäuses 2 abgewandten Seite eingesteckt. Das Partikelfilter 7 ist dabei koaxial zum Aufnahmerohr 6 angeordnet.

Im Beispiel ist außerdem ein Umlenkgehäuse 9 vorgesehen. Dieses enthält entsprechend Fig. 3 eine Umlenkkammer 10. Ferner weist das Umlenkgehäuse 9 zumindest einen mit der Umlenkkammer 10 kommunizierenden Einlass 11 sowie zumindest einen mit der Umlenkkammer 10 kommunizierenden Auslass 12 auf. Das Umlenkgehäuse 9 ist an das Gehäuse 2 der Abgasbehandlungseinrichtung 1, das im Folgenden auch als Hauptgehäuse 2 bezeichnet werden kann, angebaut. Hierzu kommt zumindest eine Befestigungseinrichtung 13 zum Einsatz, die ein lösbares Befestigen des jeweiligen Einlasses 11 des Umlenkgehäuses 9 am jeweiligen Auslassende 8 des jeweiligen Aufnahmerohrs 6 ermöglicht.

Zusätzlich oder alternativ kann die hier gezeigte Abgasbehandlungseinrichtung 1 außerdem ein Mischgehäuse 14 aufweisen, das im Hauptgehäuse 2 angeordnet ist. Das Mischgehäuse 14 enthält eine Mischkammer 15 und besitzt einen Einlass 16, der mit der Mischkammer 15 kommuniziert, sowie einen Auslass 17, der ebenfalls mit der Mischkammer 15 kommuniziert. Sowohl der Einlass 16 als auch der Auslass 17 durchsetzen den ersten Endboden 4 des Hauptgehäuses 2. Erkennbar ist bei den hier gezeigten Ausführungsformen die Mischkammer 14 nur im Bereich einer dem ersten Boden 4 zugewandten Stirnseite 18 in körperlichem Kontakt mit dem Hauptgehäuse 2, während es im Übrigen vom Hauptgehäuse 2, also insbesondere vom Mantel 3 und vom zweiten Endboden 5 beabstandet ist. Die Dimensionierung des Mischgehäuses 14 ist zweckmäßig so an die Dimensionierung des Hauptgehäuses 2 angepasst, dass ein in der Mischkammer 15 vom Einlass 16 entfernter Umlenkbereich 19 vom ersten Endboden 4 weiter entfernt ist als vom zweiten Endboden 5. Mit anderen Worten, das Mischgehäuse 14 erstreckt sich vom ersten Endboden 4 bis zum zweiten Endboden 5, jedoch vorzugsweise ohne diesen zu berühren. Hierdurch erhält die Mischkammer 15 eine vergleichsweise große Länge in axialer Richtung des, insbesondere zylindrischen oder tonnenförmigen, Hauptgehäuses 2.

Der Auslass 17 des Mischgehäuses 14 mündet in eine Umlenkkammer 20 ein, die im Folgenden auch als weitere Umlenkkammer 20 bezeichnet werden kann. In diese weitere Umlenkkammer 20 mündet ferner zumindest ein Einlass 21 wenigstens eines SCR-Katalysators 22 ein. Der jeweilige Einlass 21 des SCR-Katalysators 22 durchdringt dabei ebenfalls den ersten Endboden 4. Der jeweilige SCR-Katalysator 22 erstreckt sich im Übrigen im Inneren 23 des Hauptgehäuses 2. Entsprechend Fig. 1 weist die Abgasbehandlungseinrichtung 1 im Beispiel zwei derartige SCR-Katalysatoren 22 auf. Es ist klar, dass es ebenso mehr oder weniger SCR-Katalysatoren 22 sein können. Die beiden SCR-Katalysatoren 22 sind parallel durchströmt und münden auslassseitig über jeweils einen entsprechenden Auslass 24 in das Innere 23 bzw. in eine Beruhigungskammer 25 des Hauptgehäuses 2 ein, die im Inneren 23 ausgebildet ist. Rein exemplarisch besitzt der SCR-Katalysator 22 im Beispiel zwei hintereinander angeordnete, also in Reihe durchströmbare SCR-Katalysatorelemente 26.

Das Hauptgehäuse 2 weist in üblicher Weise einen Auslassanschluss 27 auf, der zum Beispiel mit der Beruhigungskammer 25 kommuniziert. Im Hauptgehäuse 2 kann außerdem ein Zwischenboden 28 angeordnet sein, der im Inneren 23 die Beruhigungskammer 25 von einer Absorptionskammer 29 trennt, die im Beispiel mit einem schallabsorbierenden Material 30 gefüllt sein kann. Der Zwischenboden 28 ist für Luftschall durchlässig ausgestaltet. Beispielsweise besitzt er eine entsprechende Perforation. Darüber hinaus können weitere Schalldämpfungsmaßnahmen in der Abgasbehandlungseinrichtung 1 vorgesehen sein.

Das Hauptgehäuse 2 ist ferner mit einem Einlassanschluss 31 ausgestattet, der entsprechend Fig. 3 im Inneren 23 über eine Umlenkschale 32 an einen Einlass 33 eines Oxidationskatalysators 34 angeschlossen ist. Der Oxidationskatalysator 34 ist stromauf des Partikelfilters 7 angeordnet. Sofern mehrere Partikelfilter 7 im Hauptgehäuse 2 untergebracht sind, sind auch entsprechende viele Oxidationskatalysatoren 34 vorgesehen, die über einen gemeinsamen Einlassanschluss 31 oder über separate Einlassanschlüsse 31 mit Abgas beaufschlagt werden. Ebenso ist es möglich für mehrere Partikelfilter 7 einen gemeinsamen Oxidationskatalysator 34 vorzusehen.

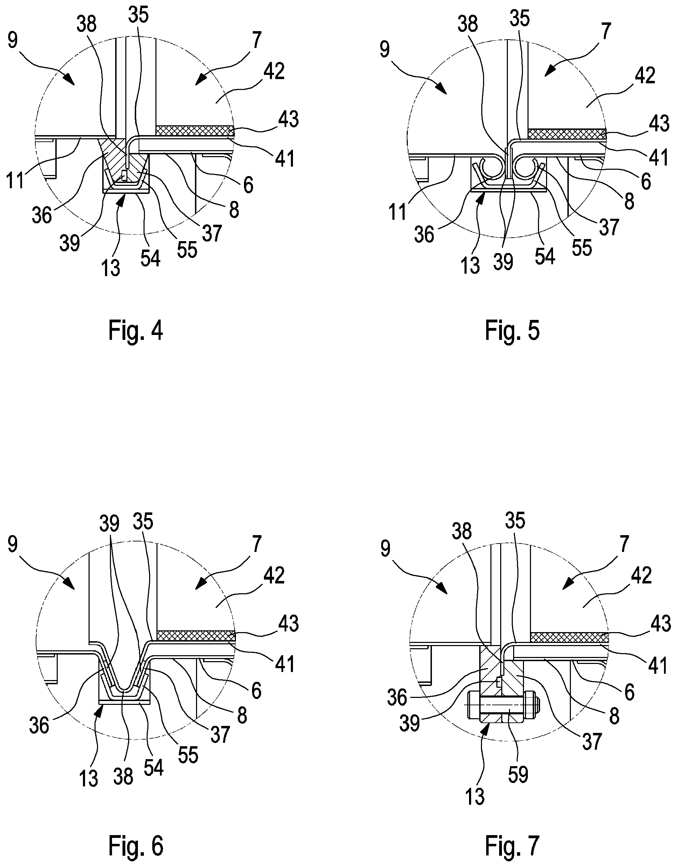

Mit Bezug auf die Fig. 4-7 wird im Folgenden auf eine bevorzugte Ausführungsform bzw. auf zugehörige Varianten näher eingegangen. Dementsprechend besitzt das Partikelfilter 7 einen dem Umlenkgehäuse 9 zugewandten auslassseitigen Endabschnitt 35, der zweckmäßig so konfiguriert ist, dass er in die Befestigungseinrichtung 13 eingebunden werden kann. Dabei ist besagter Endabschnitt 35 so in die Befestigungseinrichtung 13 eingebunden, dass sich dadurch ein axiales Festlegen des Partikelfilters 7 am Aufnahmerohr 6 bzw. am Einlass 11 des Umlenkgehäuses 9 und somit auch ein axiales Festlegen des Partikelfilters 7 am Umlenkgehäuse 9 ausbildet. Durch Lösen der Befestigungseinrichtung 13 ist auch die axiale Festlegung des Partikelfilters 7 aufgehoben, so dass das Partikelfilter 7 aus dem Aufnahmerohr 6 axial herausziehbar ist, wenn das Umlenkgehäuse 9 entfernt ist. Durch Montieren des Umlenkgehäuses 9 und durch Befestigen des Umlenkgehäuses 9 am Hauptgehäuse 2 wird mit Hilfe der Befestigungseinrichtung 13 gleichzeitig auch das jeweilige Partikelfilter 7 in der dafür vorgesehenen Relativlage festgelegt.

Bei den Ausführungsformen der Fig. 4-6 ist die Befestigungseinrichtung 13 als Schellenverbindung ausgestaltet. Im Unterschied dazu zeigt Fig. 7 eine als geschraubte Flanschverbindung ausgestaltete Befestigungseinrichtung 13. Entsprechend den Fig. 4-7 umfasst die jeweilige Befestigungseinrichtung 13 einen ersten Befestigungsflansch 36, der am freien Ende des jeweiligen Einlasses 11 ausgebildet ist. Ferner umfasst die Befestigungseinrichtung 13 einen zweiten Befestigungsflansch 37, der am freien Auslassende 8 des jeweiligen Aufnahmerohrs 6 ausgebildet ist. Der auslassseitige Endabschnitt 35 des Partikelfilters 7 weist nun einen Bund 38 auf, der nach außen absteht und dabei segmentweise oder bevorzugt vollständig umlaufend ausgestaltet ist. Im gezeigten montierten Zustand ist dieser Bund 38 axial zwischen den Befestigungsflanschen 36, 37 der Befestigungseinrichtung 13 angeordnet. Zweckmäßig ist dabei die Befestigungseinrichtung 13 so konfiguriert, dass sie eine axiale Verspannung des Bunds 38 zwischen den Befestigungsflanschen 36, 37 ermöglicht.

Die jeweilige Befestigungseinrichtung 13 kann mit wenigstens einer Dichtung 39 ausgestattet sein, um die Gasdichtigkeit der hergestellten Verbindung zu verbessern. Im Beispiel der Fig. 4 und 7 ist jeweils genau eine solche Dichtung 39 vorgesehen, die unmittelbar an beiden Befestigungsflanschen 36, 37 axial anliegt. In diesen Fällen liegt der Bund 38 unmittelbar an den Befestigungsflanschen 36, 37 an. Im Unterschied dazu sind bei den Ausführungsformen der Fig. 5 und 6 zwei derartige Dichtungen 39 vorgesehen, wobei die Befestigungsflansche 36, 37 jeweils über eine dieser Dichtungen 39 an voneinander abgewandten Seiten am Bund 38 axial abgestützt sind. Besonders zweckmäßig ist eine Ausführungsform, bei welcher die Dichtungen 39 am Bund 38 befestigt sind, zum Beispiel durch Ankleben oder Anvulkanisieren. Durch Wechseln des Partikelfilters 7 kann dann automatisch auch die jeweilige Dichtung 39 erneuert werden. Außerdem vereinfacht sich die Montage.

Um das Partikelfilter 7 vereinfacht auswechseln zu können, ist es zweckmäßig mit einem Mantel 41 ausgestattet, der rohrförmig konzipiert ist und der zumindest ein Partikelfilterelement 42 aufnimmt. Das Partikelfilterelement 42 ist dabei in üblicher Weise mittels einer Lagermatte 43 umhüllt und damit im Mantel 41 lagepositioniert. Zweckmäßig ist der zuvor genannte Bund 38 integral an diesem Mantel 41 des Partikelfilters 7 ausgeformt.

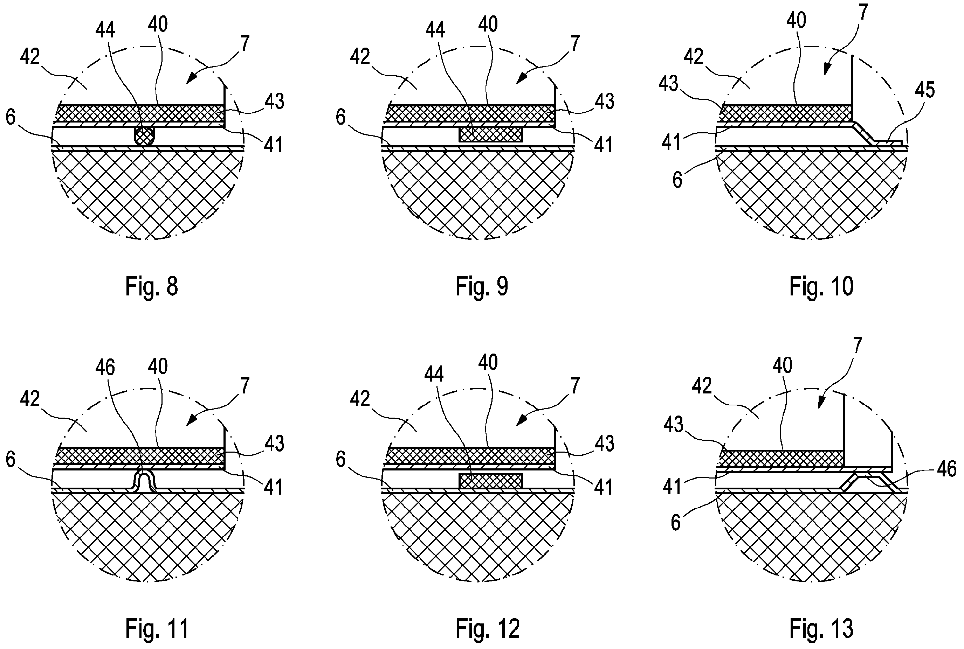

Entsprechend Fig. 3 kann ein vom Umlenkgehäuse 9 entfernter einlassseitiger Endabschnitt 40 des Partikelfilters 7 am Aufnahmerohr 6 so radial abgestützt sein, dass besagter Endabschnitt 40 relativ zum Aufnahmerohr 6 axial verschiebbar ist. Diese axiale Verschiebbarkeit des einlassseitigen Endabschnitts 40 kann auf unterschiedliche Weise realisiert werden. In den Fig. 8-13 sind mehrere alternative Lösungen exemplarisch dargestellt. Beispielsweise kann entsprechend Fig. 8 am Partikelfilter 7 bzw. an dessen Mantel 41 ein ringförmiger oder ringsegmentförmiger Lagerkörper 44 befestigt sein, der am Aufnahmerohr 6 abgleiten kann.

Entsprechend den Fig. 9 und 12 kann der Lagerkörper 44 elastisch ausgestaltet sein und beispielsweise durch ein vollständig umlaufendes oder segmentweise umlaufendes Band oder Kissen aus Drahtgestrick oder Lagermattenmaterial gebildet sein. Dieser elastische Lagerkörper 44 kann entsprechend Fig. 9 am Partikelfilter 7 bzw. an dessen Mantel 41 befestigt sein und am Aufnahmerohr 6 abgleiten. Ebenso ist es möglich, entsprechend Fig. 12 einen derartigen elastischen Lagerkörper 44 fest am Aufnahmerohr 6 anzubringen, so dass das Partikelfilter 7 bzw. dessen Mantel 41 daran abgleiten kann.

Bei den Ausführungsformen der Fig. 10, 11 und 13 wird kein separater Lagerkörper 14 verwendet, vielmehr wird eine die Lagerung ermöglichende Kontur unmittelbar am Partikelfilter 7 bzw. an dessen Mantel 41 entsprechend Fig. 10 oder unmittelbar am Aufnahmerohr 6 entsprechend den Fig. 11 und 13 ausgeformt. Beispielsweise zeigt Fig. 10 eine Querschnittsaufweitung 45, die unmittelbar am Mantel 41 des Partikelfilters 7 ausgeformt ist und die vollständig umlaufend oder segmentweise umlaufend konfiguriert sein kann. Erkennbar stützt sich diese Querschnittsaufweitung 45 unmittelbar am Aufnahmerohr 6 ab. Im Unterschied dazu ist bei den Ausführungsformen der Fig. 11 und 13 eine am Aufnahmerohr 6 ausgeformte Querschnittsverengung 46 vorgesehen, die so dimensioniert ist, dass es zu einer direkten radialen Kontaktierung mit dem Partikelfilter 7 bzw. mit dessen Mantel 41 kommt. Auch diese Querschnittsverengung 46 kann sich in Umfangsrichtung vollständig umlaufend oder segmentweise umlaufend erstrecken. Beispielsweise deutet die in Fig. 11 gezeigte linienförmige Abstützung eine ringförmig umlaufende Querschnittsverengung 46 an, während die in Fig. 13 gezeigte flächige Abstützung eine punktweise bzw. segmentweise umlaufende Querschnittsverengung 46 andeutet, die mehrere, in Umfangsrichtung beabstandet angeordnete Kontaktbereiche besitzt.

Fig. 3 zeigt eine weitere Besonderheit der hier vorgestellten Abgasbehandlungseinrichtung 1. Der Oxidationskatalysator 34 umfasst im Beispiel ein Oxidationskatalysatorelement 47, das in einem rohrförmigen Mantel 48 angeordnet ist und mittels einer entsprechenden Lagermatte 49 im zugehörigen Mantel 48 positioniert ist. Der Mantel 48 des Oxidationskatalysators 34 ist an einer Auslassseite 50 des Oxidationskatalysators 34 axial verlängert. Diese axiale auslassseitige Verlängerung des Mantels 48 des Oxidationskatalysators 34 bildet bei den hier gezeigten Ausführungsformen das Aufnahmerohr 6. Hierdurch ergibt sich eine extreme Vereinfachung und Gewichtsersparnis bei der Realisierung der einfachen Austauschbarkeit des Partikelfilters 7.

Entsprechend Fig. 3 sind der Auslass 12 des Umlenkgehäuses 9 und der Einlass 16 des Mischgehäuses 14 miteinander kommunizierend verbunden. Dabei soll auch für diese Verbindung eine Befestigungseinrichtung 51 verwendet werden, die es ermöglicht, den Auslass 12 und den Einlass 16 lösbar aneinander zu befestigen. Bei dieser weiteren Befestigungseinrichtung 51 kann es sich grundsätzlich um die gleiche Bauart der zuvor genannten Befestigungseinrichtung 13 handeln. Somit handelt es sich auch hier bevorzugt um eine Schellenverbindung bzw. um eine geschraubte Flanschverbindung.

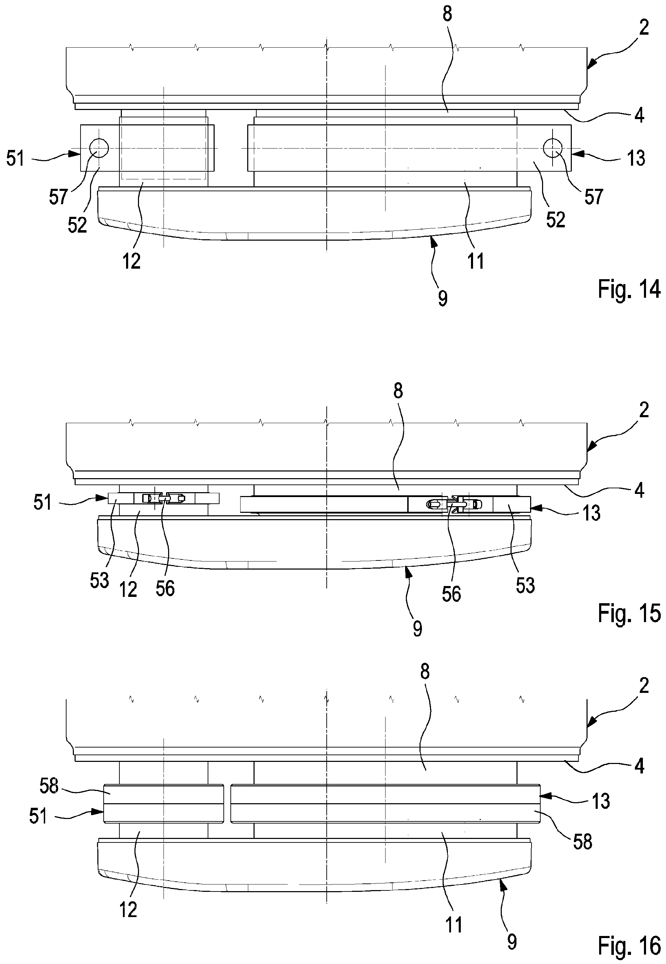

Die Fig. 14-16 zeigen unterschiedliche Ausführungsformen. Die Fig. 14 und 15 zeigen jeweils eine Schellenverbindung, wobei die jeweilige Schelle 52 als Flachschelle 52 konzipiert ist, die nur eine radiale Verpressung der koaxial ineinander gesteckten Rohrabschnitte bewirkt, nämlich einerseits zwischen Auslass 8 des Aufnahmerohrs 6 und Einlass 11 des Umlenkgehäuses 9 und andererseits zwischen dem Auslass 12 des Umlenkgehäuses 9 und dem Einlass 16 des Mischgehäuses 14. Bevorzugt wird eine Ausgestaltung entsprechend Fig. 15, bei der die jeweilige Schellenverbindung 13, 51 als V-Schelle 53 ausgestaltet ist. Eine derartige V-Schelle 53 kann entsprechend den Fig. 4-6 mit einem umlaufenden Spannband 54 sowie mit einem V-Profil 55 ausgestattet sein, wodurch mit Hilfe einer derartigen V-Schelle 53, die auch als V-Bandschelle bezeichnet werden kann, eine axiale Verpressung der Befestigungsflansche 36, 37 erreicht werden kann. In Fig. 15 sind Spanneinrichtungen 56 angedeutet, die in üblicher Weise ein Spannen der jeweiligen Schelle 53 ermöglichen. Im Unterschied dazu zeigt Fig. 14 bei der jeweiligen Schelle 52 lediglich einen Bereich 57, der zum Anordnen einer geeigneten Spannvorrichtung vorgesehen ist.

Schließlich zeigt Fig. 16 eine Ausführungsform, bei welcher die jeweilige Befestigungseinrichtung 13, 51 als geschraubte Flanschverbindung 58 ausgestaltet ist. Entsprechende Schrauben 59 sind in Fig. 7 erkennbar. Aus den Fig. 14-16 lässt sich entnehmen, dass die mit den V-Schellen 53 arbeitenden Befestigungseinrichtungen 13, 51 in axialer Richtung besonders kompakt bauen. Fig. 3 deutet an, dass die beiden Befestigungseinrichtungen 13, 51 nicht zwangsläufig identisch konfiguriert sein müssen. So ist die dem Partikelfilter 7 zugeordnete Befestigungseinrichtung 13 als V-Schelle 53 konzipiert, während die dem Mischgehäuse 14 zugeordnete Befestigungseinrichtung 51 hier exemplarisch als Flachschelle 52 konzipiert ist.

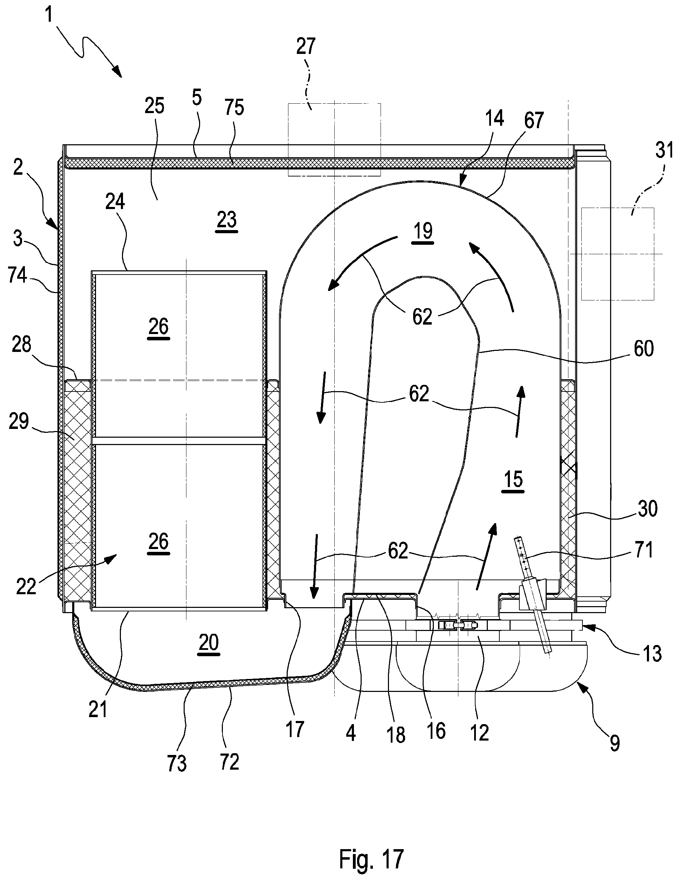

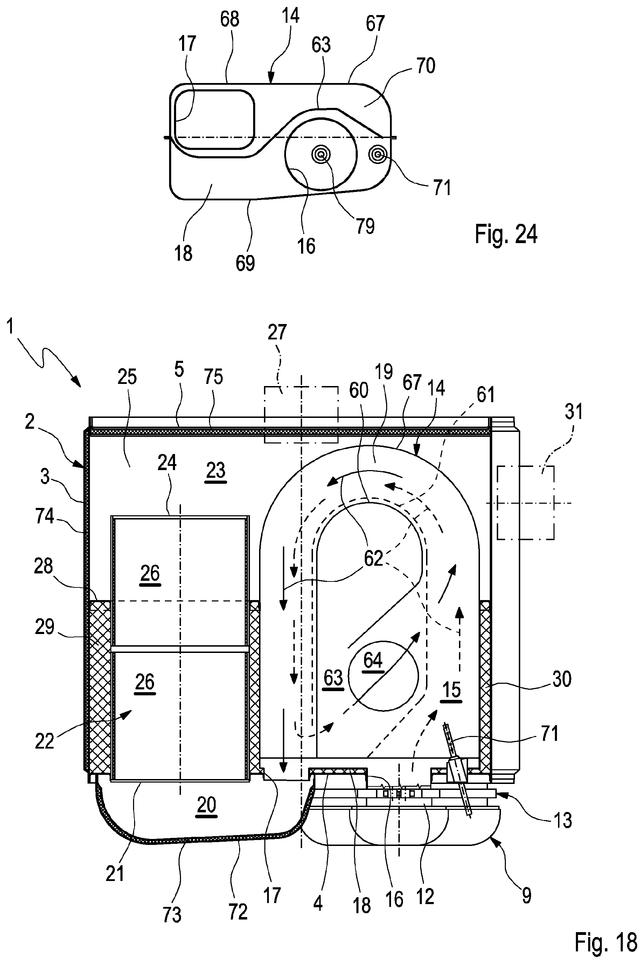

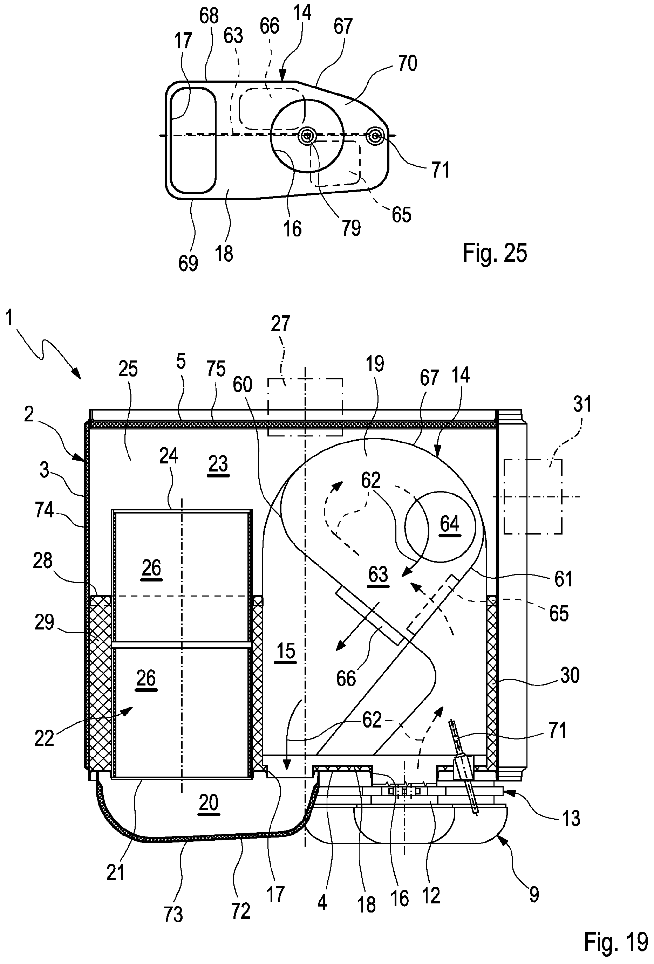

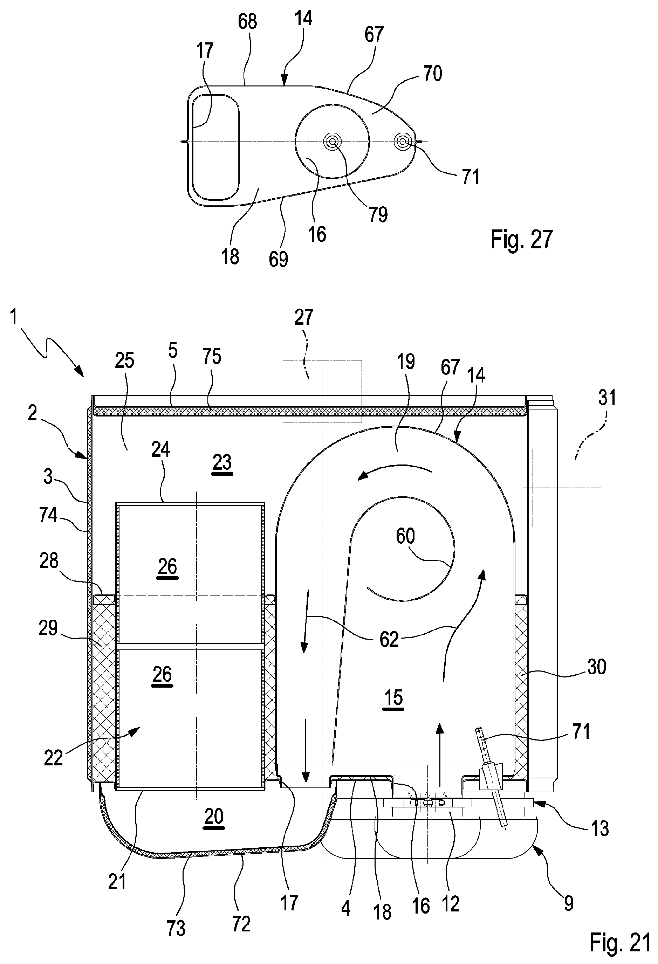

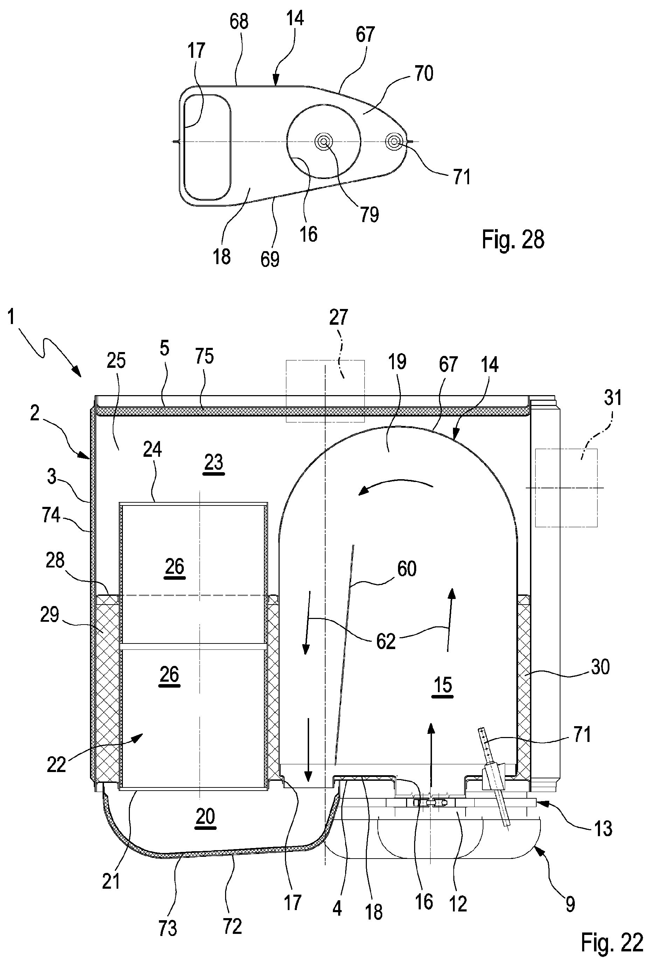

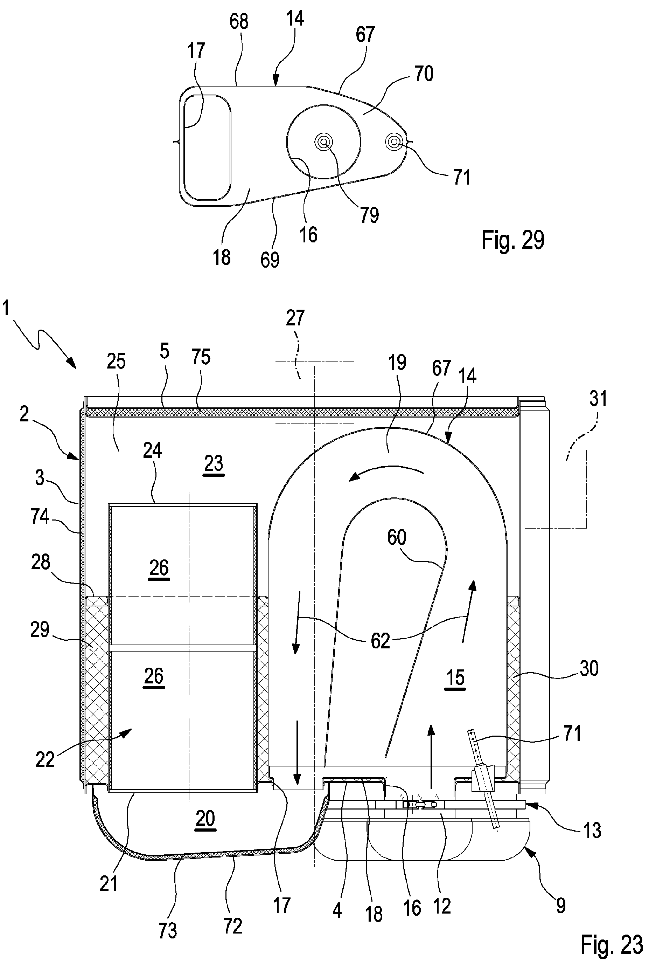

Entsprechend den Fig. 17-23 und teilweise entsprechend den Fig. 24-29 kann im Mischgehäuse 14 zumindest eine Führungswand 60 angeordnet sein. Die Ausführungsformen der Fig. 17 und 20-23 zeigen jeweils nur eine einzige Führungswand 60, während die Ausführungsformen der Fig. 18 und 19 zusätzlich eine weitere Führungswand 61 aufweisen. Die jeweilige Führungswand 60, 61 bildet innerhalb der Mischkammer 15 eine Mischstrecke 62 aus, die in den Fig. 17-23 durch Pfeile angedeutet ist. Es sind jedoch auch einfache Ausführungsformen denkbar, die ohne Führungswand 60, 61 auskommen.

Bei den Ausführungsformen der Fig. 18 und 19 ist im Mischgehäuse 14 außerdem eine Zwischenwand 63 angeordnet, die in den zugehörigen Seitenansichten der Fig. 24 bzw. 25 besser erkennbar ist. Die jeweilige Zwischenwand 63 trennt innerhalb der Mischkammer 15 zwei Ebenen voneinander. Die Mischstrecke 62 erstreckt sich durch beide Ebenen. Zur Veranschaulichung ist ein Abschnitt der Mischstrecke 62, der sich in der vom Betrachter abgewandten Ebene erstreckt, mit unterbrochenen Pfeilen dargestellt, während ein Abschnitt der Mischstrecke 62, der sich in der dem Betrachter zugewandten Ebene befindet, mit durchgezogenen Pfeilen angedeutet ist. Erkennbar lassen sich vergleichsweise komplexe Mischstrecken 62 realisieren. In jedem Fall wird die Abgasströmung durch das Mischgehäuse 14 so hindurchgeführt, dass sich zumindest eine Umlenkung von 180° zwischen einer Strömungsrichtung am Einlass 16 und einer Strömungsrichtung am Auslass 17 einstellt. Bei den Ausführungsformen der Fig. 18 und 19 wird sogar ohne weiteres eine Strömungsumlenkung von mehr als 180° erreicht. In der Ausführungsform der Fig. 18 wird die Abgasströmung dreimal um 180° umgelenkt, also insgesamt um etwa 540°. Bei der Ausführungsform der Fig. 19 erfolgt eine Strömungsumlenkung um wenigstens 360° oder zumindest 450°.

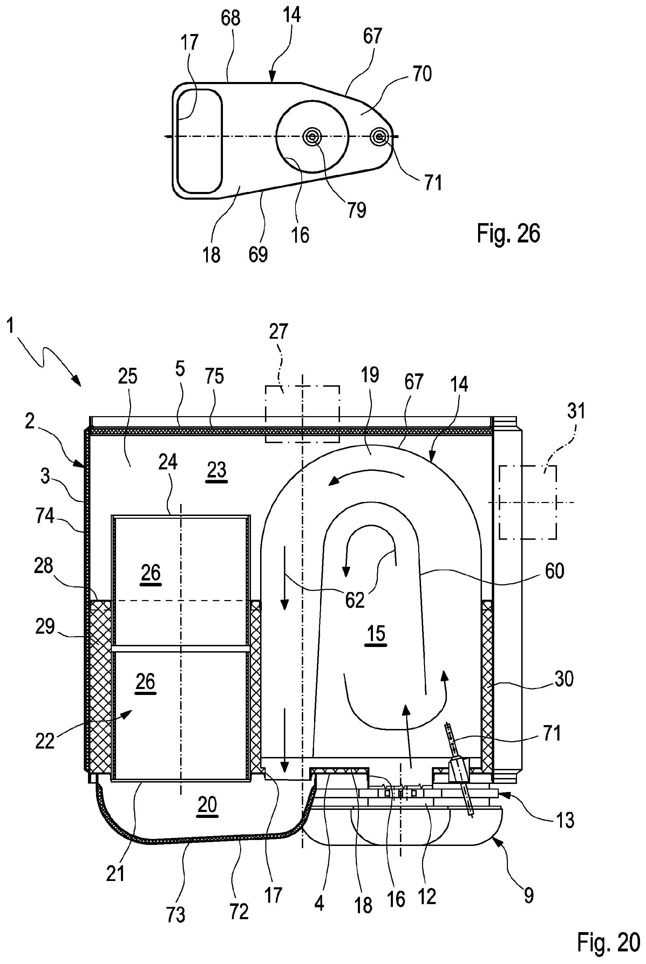

Auch die in Fig. 20 gezeigte Konfiguration, die ohne Zwischenwand 63 auskommt, führt zu einer Strömungsumlenkung von etwa 540°.

Die in den Ausführungsformen der Fig. 18 und 19 gezeigte Zwischenwand 63 besitzt zumindest eine Durchtrittsöffnung 64, durch die das Abgas entlang der Mischstrecke 62 von der einen Ebene zur anderen Ebene gelangt. Das Mischgehäuse 14 ist dabei zweckmäßig so konzipiert, dass der Einlass 16 mit der einen Ebene kommuniziert, während der Auslass 17 mit der anderen Ebene kommunizierend verbunden ist. Bei der in Fig. 19 gezeigten Ausführungsform sind die beiden Führungswände 60, 61 jeweils mit einer Verbindungsöffnung 65 bzw. 66 ausgestattet. Bei diesen Ausführungsformen sind die Führungswände 60, 61 innerhalb der Mischkammer 15 so angeordnet, dass sie die Mischstrecke 62 in mehrere Sektoren unterteilen. Die zuvor genannten Verbindungsöffnungen 65, 66 ermöglichen nun eine kommunizierende Verbindung aufeinanderfolgender Sektoren. Hierdurch kann die Strömungsführung verbessert und mit einfachen Mitteln die Mischstrecke 62 verlängert werden. Es ist klar, dass bei einer einfachen Ausführungsform die Mischkammer 14 auch ohne Führungswand 60, 61 und ohne Zwischenwand 63 auskommt.

Zweckmäßig ist das Mischgehäuse 14 gegenüber dem Inneren 23 des Hauptgehäuses 2 gasdicht ausgestaltet. In der Folge kann das Hauptgehäuse 2 aus preiswerteren Materialien hergestellt werden. Ferner können beim Hauptgehäuse 2 Leckagen toleriert werden, so dass auch die Herstellung des Hauptgehäuses 2 preiswerter realisierbar ist.

Bei den hier gezeigten Ausführungsformen besitzt das Mischgehäuse 14 einen Gehäusekörper 67. Der Gehäusekörper 67 weist die weiter oben bereits erwähnte Stirnseite 18 auf, die dem ersten Endboden 4 des Hauptgehäuses 2 zugewandt ist. Diese Stirnseite 18 weist nun den Einlass 16 und den Auslass 17 des Mischgehäuses 14 auf. Entsprechend den hier gezeigten, bevorzugten Ausführungsformen ist der Einlass 16 als Einlassstutzen ausgestaltet, der eine nicht näher bezeichnete Einlassöffnung des ersten Endbodens 4 des Hauptgehäuses 2 durchsetzt. Exemplarisch kann besagte Einlassöffnung mit einem nach außen abstehenden, ringförmig umlaufenden Kragen versehen sein. Analog dazu kann auch der Auslass 17 als Auslassstutzen ausgestaltet sein, der eine nicht näher bezeichnete Auslassöffnung des ersten Endbodens 4 des Hauptgehäuses 2 durchsetzt. Auch diese Auslassöffnung kann mit einem nach außen abstehenden, ringförmig umlaufenden Kragen versehen sein. Die Stutzen erstrecken sich bevorzugt parallel zueinander.

Der Gehäusekörper 67 kann vorzugsweise in Schalenbauweise konzipiert sein und gemäß den Darstellungen der Fig. 24-29 eine Oberschale 68 und eine Unterschale 69 aufweisen. Ferner kann als zusätzliches Bauteil eine die Stirnseite 18 bildende Stirnschale 70 vorgesehen sein. Durch die vorgeschlagene Bauweise lässt sich das Mischgehäuse 14 besonders preiswert herstellen und gasdicht ausführen.

Die hier gezeigte Abgasbehandlungseinrichtung 1 ist entsprechend den Fig. 17-23 sowie 24-29 mit mindestens einer Zumesseinrichtung 71 ausgestattet, mit deren Hilfe ein flüssiges Edukt, nämlich vorzugsweise ein Reduktionsmittel in die Mischkammer 15 eingebracht werden kann. Beispielsweise kann stromauf des SCR-Katalysators 22 Ammoniak bzw. Harnstoff bzw. eine wässrige Harnstofflösung der Abgasströmung zugemischt werden. Zweckmäßig ist die Zumesseinrichtung 71 hierzu so positioniert, dass die Einbringung des Reduktionsmittel quasi am Anfang der Mischstrecke 62 erfolgt. Vorzugsweise erfolgt die Positionierung der Zumesseinrichtung 71 derart, dass sie das Reduktionsmittel im Bereich des Einlasses 16 des Mischgehäuses 14 in die Mischkammer 15 einbringen kann. Die Zumesseinrichtung 71 ist zweckmäßig am ersten Endboden 4 angebracht, und zwar so, dass sie diesen ersten Endboden 4 sowie das Mischgehäuse 14 durchsetzt. Im Beispiel ist die Zumesseinrichtung 71 so positioniert, dass sie die Stirnseite 18 bzw. die Stirnschale 70 des Gehäusekörpers 68 durchdringt.

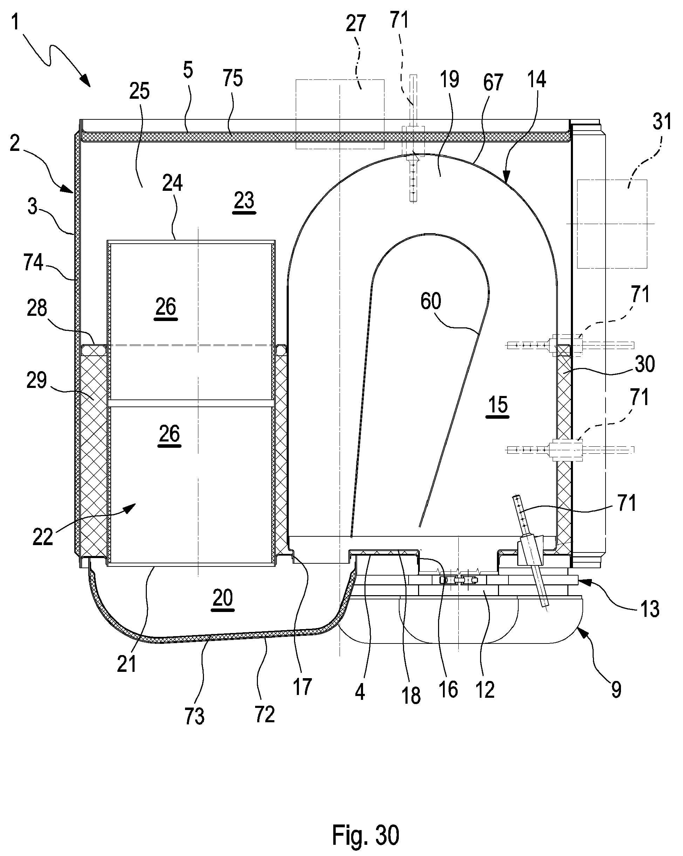

Grundsätzlich ist die Anordnung bzw. Positionierung der Zumesseinrichtung 71 bezüglich des Mischgehäuses 14 quasi beliebig wählbar. Fig. 30 zeigt daher exemplarisch weitere Positionen, die sich zur Anordnung einer solchen Zumesseinrichtung eignen.

Zur Realisierung der weiteren Umlenkkammer 20 kann am ersten Endboden 4 eine Umlenkschale 72 angebracht sein. Zusammen mit einem von der Umlenkschale 72 überdeckten Bereich des ersten Endbodens 4 begrenzt die Umlenkschale 72 die weitere Umlenkkammer 20. Entsprechend Fig. 1 ist diese Umlenkschale 72 so dimensioniert, dass sie den Auslass 17 des Mischgehäuses 14 sowie den jeweiligen Einlass 21 des jeweiligen SCR-Katalysators 22 überdeckt.

Die Umlenkschale 72 ist im Beispiel doppelwandig konzipiert, was zur Realisierung einer Luftspaltisolierung genutzt werden kann. Ebenso kann in die Doppelwand der Umlenkschale 72 ein thermisch isolierendes Isolationsmaterial 73 eingebracht sein. Der Mantel 3 des Hauptgehäuses 2 kann doppelwandig konzipiert sein. Dies kann zur Realisierung einer Luftspaltisolierung oder zum Einbringen eines thermisch isolierenden Isolationsmaterials 74 genutzt werden. Der zweite Endboden 5 kann doppelwandig konzipiert sein für eine Luftspaltisolierung oder für die Aufnahme eines thermisch isolierenden Isolationsmaterials 75.

Entsprechend Fig. 3 umfasst das Umlenkgehäuse 9 einen topfförmigen Schalenkörper 76 und einen Deckel oder Boden 77, zwischen denen die Umlenkkammer 10 begrenzt ist. Der Deckel oder Boden 77 weist den jeweiligen Einlass 11 und den jeweiligen Auslass 12 auf. Der Schalenkörper 76 ist im Beispiel der Fig. 3 doppelwandig konzipiert und kann dementsprechend eine Luftspaltisolierung oder wie hier einen Aufnahmeraum zur Unterbringung eines thermisch isolierenden Isolationsmaterials 78 bilden.

Entsprechend Fig. 3 sowie entsprechend den Fig. 24-29 kann alternativ oder zusätzlich zu der zuvor genannten Zumesseinrichtung 71 eine Zumesseinrichtung 79 oder weitere Zumesseinrichtung 79 vorgesehen sein, mit deren Hilfe ebenfalls ein flüssiges Edukt, insbesondere ein Reduktionsmittel, in die Abgasströmung eingebracht werden kann. Diese weitere Zumesseinrichtung ist hier am Umlenkgehäuse 9 angeordnet, und zwar derart, dass sie das jeweilige Edukt in Richtung zum Einlass 16 des Mischgehäuses 14 einbringen kann. In diesem Fall gehört die Zumesseinrichtung 79 zum Bauumfang des Umlenkgehäuses 9. Bei dieser Konfiguration wird zusätzlich die Wegstrecke bis zum Einlass 16 bzw. durch den Einlass 16 zur Mischkammer 15 bzw. zur Mischstrecke 62 hinzuaddiert, um diese nochmals zu verlängern.

## Patentansprüche

1. Abgasbehandlungseinrichtung für eine Abgasanlage einer Brennkraftmaschine, insbesondere eines Kraftfahrzeugs,
- mit einem Gehäuse (2), das einen seitlich umlaufenden Mantel (3) und zumindest einen Endboden (4) aufweist,
- mit einem Mischgehäuse (14), das im Inneren (23) des Gehäuses (2) angeordnet ist und das eine Mischkammer (15), einen mit der Mischkammer (15) kommunizierenden Einlass (16) und einen mit der Mischkammer (15) kommunizierenden Auslass (17) aufweist, und
- mit zumindest einer Zumesseinrichtung (71, 79) zum Einbringen eines Reduktionsmittels in die Mischkammer (15),
**dadurch gekennzeichnet,**
- **dass** der Einlass (16) den Endboden (4) durchsetzt,
- **dass** der Auslass (17) den Endboden (4) durchsetzt, und
- **dass** im Mischgehäuse (14) zumindest eine Führungswand (60, 61) angeordnet ist, die in der Mischkammer (15) eine vom Einlass (16) über mindestens einen Umlenkabschnitt (19) zum Auslass (17) führende Mischstrecke (62) ausbildet.

2. Abgasbehandlungseinrichtung nach Anspruch 1,
**dadurch gekennzeichnet,**
**dass** die Mischkammer (15) gegenüber dem Inneren (23) des Gehäuses (2) gasdicht ist.

3. Abgasbehandlungseinrichtung nach Anspruch 1 oder 2,
**dadurch gekennzeichnet,**
**dass** das Mischgehäuse (14) einen Gehäusekörper (68) mit einer dem Endboden (4) des Gehäuses (2) zugewandten Stirnseite (18) aufweist, wobei die Stirnseite (18) den Einlass (16) und den Auslass (17) aufweist.

4. Abgasbehandlungseinrichtung nach einem der Ansprüche 1 bis 3,
**dadurch gekennzeichnet,**
- **dass** der Einlass (16) als Einlassstutzen ausgestaltet ist, der eine Einlassöffnung des Bodens (4) des Gehäuses (2) durchsetzt, und/oder
- **dass** der Auslass (17) als Auslassstutzen ausgestaltet ist, der eine Auslassöffnung des Endbodens (4) des Gehäuses (2) durchsetzt.

5. Abgasbehandlungseinrichtung nach einem der Ansprüche 1 bis 4,
**dadurch gekennzeichnet,**
**dass** im Mischgehäuse (14) eine Zwischenwand (63) angeordnet ist, die in der Mischkammer (15) zwei Ebenen voneinander trennt, in denen sich die Mischstrecke (62) erstreckt.

6. Abgasbehandlungseinrichtung nach Anspruch 5,
**dadurch gekennzeichnet,**
**dass** die Zwischenwand (63) zumindest eine Durchtrittsöffnung (64) aufweist, durch die eine Abgasströmung von der einen Ebene zur anderen Ebene gelangt.

7. Abgasbehandlungseinrichtung nach einem der Ansprüche 1 bis 6,
**dadurch gekennzeichnet,**
**dass** die jeweilige Führungswand (60, 61) die Mischstrecke (62) in Sektoren unterteilt, die über mindestens eine Verbindungsöffnung (65, 66) miteinander kommunizierend verbunden sind, die in die jeweilige Führungswand (60, 61) eingebracht ist.

8. Abgasbehandlungseinrichtung nach einem der Ansprüche 1 bis 7,
**dadurch gekennzeichnet,**
**dass** eine durch das Mischgehäuse (14) geführte Abgasströmung vom Einlass (16) zum Auslass (17) um mehr als 180° oder um mindestens 450° oder um mindestens 540° umgelenkt wird.

9. Abgasbehandlungseinrichtung nach einem der vorhergehenden Ansprüche,
**dadurch gekennzeichnet,**
**dass** die Zumesseinrichtung (71) am Gehäuse (2) angeordnet ist und dessen Endboden (4) sowie das Mischgehäuse (14) durchsetzt.

10. Abgasbehandlungseinrichtung nach einem der vorhergehenden Ansprüche,
**dadurch gekennzeichnet,**
**dass** die jeweilige Zumesseinrichtung (71, 79) so positioniert ist, dass sie das Reduktionsmittel im Bereich des Einlasses (16) in die Mischkammer (15) einbringen kann.

11. Abgasbehandlungseinrichtung nach einem der Ansprüche 1 bis 10,
**dadurch gekennzeichnet,**
**dass** im Gehäuse (2) zumindest ein SCR-Katalysator (22) angeordnet ist, dessen Einlass (21) über eine Umlenkkammer (20) mit dem Auslass (17) des Mischgehäuses (14) kommunizierend verbunden ist.

12. Abgasbehandlungseinrichtung nach einem der Ansprüche 1 bis 11,
**dadurch gekennzeichnet,**
**dass** im Gehäuse (2) zumindest ein Partikelfilter (7) angeordnet ist, dessen Auslass über eine Umlenkkammer (10) mit dem Einlass (16) des Mischgehäuses (14) kommunizierend verbunden ist.

13. Abgasbehandlungseinrichtung nach Anspruch 12,
**dadurch gekennzeichnet,**
**dass** die den Auslass des jeweiligen Partikelfilters (7) mit dem Einlass (16) des Mischgehäuses (14) verbindende Umlenkkammer (10) in einem Umlenkgehäuse (9) angeordnet ist, dessen Einlass (11) über eine Befestigungseinrichtung (13) lösbar mit dem Auslass des Partikelfilters (7) und dessen Auslass (12) über eine gleiche oder andere Befestigungseinrichtung (51) lösbar mit dem Einlass (16) des Mischgehäuses (14) verbunden ist.

14. Abgasbehandlungseinrichtung nach Anspruch 13,
**dadurch gekennzeichnet,**
**dass** der Auslass des jeweiligen Partikelfilters (7) durch ein Auslassende (8) eines Aufnahmerohrs (6) gebildet ist, in welches das Partikelfilter (7) axial eingesteckt ist.

## Claims

1. Exhaust treatment device for an exhaust system of an internal combustion engine, in particular a motor vehicle, comprising
- a housing (2) with a casing (3) extending laterally around its circumference and at least one end base (4),
- a mixing housing (14) which is arranged on the inside (23) of the housing (2) and which comprises a mixing chamber (15), an inlet (16) communicating with the mixing chamber (15) and an outlet (17) communicating with the mixing chamber (15), and
- at least one metering device (71, 79) for introducing a reducing agent into the mixing chamber (15),
**characterised in that**
- the inlet (16) passes through the end base (4),
- the outlet (17) passes through the end base (4) and
- in the mixing housing (14) at least one guiding wall (60, 61) is arranged which in the mixing chamber (15) forms a mixing section (62) leading from the inlet (16) via at least one diverting section (19) to the outlet (17).

2. Exhaust treatment device according to claim 1, **characterised in that** the mixing chamber (15) is gas-tight relative to the inside (23) of the housing (2).

3. Exhaust treatment device according to claim 1 or 2, **characterised in that** the mixing housing (14) has a housing body (68) with an end face (18) facing the end base (4) of the housing (2), wherein the end face (18) comprises the inlet (16) and the outlet (17).

4. Exhaust treatment device according to any one of claims 1 to 3, **characterised in that**
- the inlet (16) is configured as an inlet pipe connection, which passes through an inlet opening of base (4) of the housing (2) and/or
- the outlet (17) is configured as an outlet pipe connection, which passes through an outlet opening of the end base (4) of the housing (2).

5. Exhaust treatment device according to any one of claims 1 to 4, **characterised in that** in the mixing housing (14) an intermediate wall (63) is arranged which in the mixing chamber (15) separates two planes from one another in which the mixing section (62) extends.

6. Exhaust treatment device according to claim 5, **characterised in that** the intermediate wall (63) comprises at least one through opening (64) through which an exhaust flow passes from one plane to the other plane.

7. Exhaust treatment device according to any one of claims 1 to 6, **characterised in that** the respective guiding wall (60, 61) divides the mixing section (62) into sectors which are connected to one another so as to communicate with one another via at least one connecting opening (65, 66) which is made in the respective guiding wall (60, 61).

8. Exhaust treatment device according to any one of claims 1 to 7, **characterised in that** an exhaust flow guided through said mixing housing (14) is diverted from the inlet (16) to the outlet (17) by more than 180° or by at least 450° or by at least 540°.

9. Exhaust treatment device according to any one of the preceding claims, **characterised in that** the metering device (71) is arranged on the housing (2) and passes through its end base (4) and the mixing housing (14).

10. Exhaust treatment device according to any one of the preceding claims, **characterised in that** the respective metering device (71, 79) is positioned so that it can introduce the reducing agent in the region of the inlet (16) into the mixing chamber (15).

11. Exhaust treatment device according to any one of claims 1 to 10, **characterised in that** in the housing (2) at least one SCR catalyst (22) is arranged, the inlet (21) of which is connected so as to communicate via a diverting chamber (20) to the outlet (17) of the mixing housing (14).

12. Exhaust treatment device according to any one of claims 1 to 11, **characterised in that** in the housing (2) at least one particle filter (7) is arranged, the outlet of which is connected so as to communicate via a diverting chamber (10) to the inlet (16) of the mixing housing (14).

13. Exhaust treatment device according to claim 12, **characterised in that** the diverting chamber (10) connecting the outlet of the respective particle filter (7) to the inlet (16) of the mixing housing (14) is arranged in a diverting housing (9), the inlet (11) of which is connected releasably via a securing device (13) to the outlet of the particle filter (7) and the outlet (12) of which is connected releasably by an identical or different securing device (51) to the inlet (16) of the mixing housing (14).

14. Exhaust treatment device according to claim 13, **characterised in that** the outlet of the respective particle filter (7) is formed by an outlet end (8) of a receiving pipe (6) into which the particle filter (7) is inserted axially.

## Revendications

1. Dispositif de traitement de gaz d'échappement pour un système d'échappement d'un moteur à combustion interne, en particulier d'un véhicule automobile,
- comprenant un boîtier (2), qui présente une gaine (3) latérale périphérique et au moins un fond d'extrémité (4),
- comprenant un boîtier de mélange (14), qui est disposé à l'intérieur (23) du boîtier (2) et qui présente une chambre de mélange (15), une admission (16) communiquant avec la chambre de mélange (15) et une sortie (17) communiquant avec la chambre de mélange (15), et
- comprenant au moins un dispositif de dosage (71, 79) servant à introduire un agent de réduction dans la chambre de mélange (15),
**caractérisé en ce**
- **que** l'admission (16) traverse le fond d'extrémité (4),
- **que** la sortie (17) traverse le fond d'extrémité (4), et
- **qu'**au moins une paroi de guidage (60, 61) est disposée dans le boîtier de mélange (14), laquelle réalise, dans la chambre de mélange (15), un parcours de mélange (62) menant de l'admission (16) vers la sortie (17) en passant par au moins une section de déviation (19).

2. Dispositif de traitement de gaz d'échappement selon la revendication 1,
**caractérisé en ce**
**que** la chambre de mélange (15) est étanche aux gaz par rapport à l'intérieur (23) du boîtier (2).

3. Dispositif de traitement de gaz d'échappement selon la revendication 1 ou 2,
**caractérisé en ce**
**que** le boîtier de mélange (14) présente un corps de boîtier (68) pourvu d'un côté frontal (18) tourné vers le fond d'extrémité (4) du boîtier (2), dans lequel le côté frontal (18) présente l'admission (16) et la sortie (17).

4. Dispositif de traitement de gaz d'échappement selon l'une quelconque des revendications 1 à 3,
**caractérisé en ce**
- **que** l'admission (16) est configurée sous la forme d'une tubulure d'admission, qui traverse une ouverture d'admission du fond (4) du boîtier (2), et/ou
- **que** la sortie (17) est configurée sous la forme d'une tubulure de sortie, qui traverse une ouverture de sortie du fond d'extrémité (4) du boîtier (2).

5. Dispositif de traitement de gaz d'échappement selon l'une quelconque des revendications 1 à 4,
**caractérisé en ce**
**qu'**est disposée dans le boîtier de mélange (14) une paroi intermédiaire (63), qui sépare l'un de l'autre, dans la chambre de mélange (15), deux niveaux, dans lesquels le parcours de mélange (62) s'étend.

6. Dispositif de traitement de gaz d'échappement selon la revendication 5,
**caractérisé en ce**
**que** la paroi intermédiaire (63) présente au moins une ouverture de passage (64), par laquelle un écoulement de gaz d'échappement provenant d'un des niveaux parvient à l'autre niveau.

7. Dispositif de traitement de gaz d'échappement selon l'une quelconque des revendications 1 à 6,
**caractérisé en ce**
**que** la paroi de guidage (60, 61) respective subdivise le parcours de mélange (62) en des secteurs, qui sont reliés les uns aux autres de manière communicante par l'intermédiaire au moins d'une ouverture de liaison (65, 66), qui est pratiquée dans la paroi de guidage (60, 61) respective.

8. Dispositif de traitement de gaz d'échappement selon l'une quelconque des revendications 1 à 7,
**caractérisé en ce**
**qu'**un écoulement de gaz d'échappement guidé à travers le boîtier de mélange (14) est dévié de l'admission (16) en direction de la sortie (17) selon un angle supérieur à 180° ou selon un angle d'au moins 450° ou selon un angle d'au moins 540°.

9. Dispositif de traitement de gaz d'échappement selon l'une quelconque des revendications précédentes,
**caractérisé en ce**
**que** le dispositif de dosage (71) est disposé au niveau du boîtier (2), et traverse le fond d'extrémité (4) de ce dernier ainsi que le boîtier de mélange (14).

10. Dispositif de traitement de gaz d'échappement selon l'une quelconque des revendications précédentes,
**caractérisé en ce**
**que** le dispositif de dosage (71, 79) respectif est positionné de telle sorte qu'il peut introduire dans la chambre de mélange (15) l'agent de réduction dans la zone de l'admission (16).

11. Dispositif de traitement de gaz d'échappement selon l'une quelconque des revendications 1 à 10,
**caractérisé en ce**
**qu'**au moins un catalyseur de type SCR (à réduction catalytique sélective) (22) est disposé dans le boîtier (2), l'admission (21) dudit catalyseur de type SCR étant reliée de manière communicante, par l'intermédiaire d'une chambre de déviation (20), à la sortie (17) du boîtier de mélange (14).

12. Dispositif de traitement de gaz d'échappement selon l'une quelconque des revendications précédentes 1 à 11,
**caractérisé en ce**
**qu'**est disposé, dans le boîtier (2), au moins un filtre à particules (7), dont la sortie est reliée de manière communicante, par l'intermédiaire d'une chambre de déviation (10), à admission (16) du boîtier de mélange (14).

13. Dispositif de traitement de gaz d'échappement selon la revendication 12,
**caractérisé en ce**
**que** la chambre dé déviation (10) reliant la sortie du filtre à particules (7) respectif à l'admission (16) du boîtier de mélange (14) est disposée dans un boîtier de déviation (9), dont l'admission (11) est reliée, par l'intermédiaire d'un dispositif de fixation (13), de manière amovible, à la sortie du filtre à particules (7) et dont la sortie (12) est reliée, par l'intermédiaire d'un dispositif de fixation (51) identique ou différent, de manière amovible, à l'admission (16) du boîtier de mélange (14).

14. Dispositif de traitement de gaz d'échappement selon la revendication 13,
**caractérisé en ce**
**que** la sortie du filtre à particules (7) respectif est formée par une extrémité de sortie (8) d'un tuyau de réception (6), dans lequel le filtre à particules (7) est emboîté de manière axiale.
